**Europäisches Patentamt**

**European Patent Office**

**Office européen des brevets**

(19)

(11) Numéro de publication : **0 363 543 B1**

(12)

# FASCICULE DE BREVET EUROPEEN

(45) Date de publication du fascicule du brevet :
**11.03.92 Bulletin 92/11**

(51) Int. Cl.⁵ : **B64D 25/14**

(21) Numéro de dépôt : **88402592.5**

(22) Date de dépôt : **13.10.88**

(54) **Mécanisme d'accrochage d'un dispositif de sauvetage du type toboggan simple ou canot pour aéronef.**

(43) Date de publication de la demande :
**18.04.90 Bulletin 90/16**

(45) Mention de la délivrance du brevet :
**11.03.92 Bulletin 92/11**

(84) Etats contractants désignés :
**DE ES GB IT NL**

(56) Documents cités :
**EP-A- 0 192 503
DE-A- 2 029 167
US-A- 3 397 432
US-A- 3 435 492**

(73) Titulaire : **AEROSPATIALE SOCIETE NATIONALE INDUSTRIELLE Société Anonyme dite:
37, Boulevard de Montmorency
F-75016 Paris (FR)**

(72) Inventeur : **Depeige, Alain
11 rue des Tamaris
F-31170 Tournefeuille (FR)**

(74) Mandataire : **Bonnetat, Christian et al
CABINET BONNETAT 23, Rue de Léningrad
F-75008 Paris (FR)**

## Description

La présente invention concerne les mécanismes d'accrochage d'un dispositif de sauvetage du type toboggan simple ou canot pour aéronef.

La sécurité aéronautique impose que les aéronefs amenés à voler au-dessus des mers emportent des toboggans de type canots qui, lorsque l'aéronef est obligé d'amerrir, permettent de pouvoir évacuer assez rapidement les passagers et, en plus, de leur procurer un moyen flottable pratique. Généralement, ces toboggans sont situés sur les portes, pour pouvoir être utilisés sans perte de temps quant à leur mise en fonction. Ainsi, quand un toboggan doit être emprunté par les passagers, l'équipage ouvre la porte de l'aéronef en libérant simultanément le toboggan et en lui imposant le gonflage des volumes prévus. Cependant, il est bien évident que, pendant que les passagers passent de l'intérieur de l'aéronef sur le toboggan, il soit impératif que celui-ci reste accroché au seuil de la porte et que, lorsque tous les passagers sont sortis, il puisse être très facilement et rapidement désolidarisé de ce seuil.

Plusieurs mécanismes permettant d'assurer ces fonctions ont été mis au point. Ils comprennent, d'une part des moyens d'accrochage généralement solidaires du seuil de la porte, par exemple des sabots situés de chaque côté de cette porte et, d'autre part, des moyens de liaison solidaires du toboggan et pouvant coopérer avec les moyens d'accrochage pour maintenir le toboggan en place quand les passagers montent sur lui et, ensuite, le libérer de l'aéronef très rapidement pour qu'il puisse s'éloigner de lui. Parmi ces moyens de liaison, les plus connus comportent une barre principale pouvant coopérer avec les sabots d'accrochage par des mécanismes dits d'armement et de verrouillage-déverrouillage et par une deuxième barre secondaire reliée à la barre principale par un mécanisme de dégrafage rapide, cette barre secondaire étant liée au toboggan, par exemple, par des sangles d'amarrage.

Ces mécanismes donnent toute satisfaction quant au résultat pour lequel ils sont conçus. Cependant, il est bien connu que tous les constructeurs de moyens de transport, et plus particulièrement dans le domaine de l'aéronautique, tentent de lutter contre le poids.

La présente invention a donc pour but de réaliser un mécanisme d'accrochage d'un dispositif de sauvetage du type toboggan simple ou canot, qui soit aussi performant que ceux de l'art antérieur, sinon plus, mais présentant, notamment, un poids beaucoup plus faible en comportant moins de pièces que ceux de l'art antérieur, tout en étant d'une manipulation très facile.

Plus précisément, la présente invention a pour objet un mécanisme d'accrochage d'un dispositif de sauvetage du type toboggan simple ou canot pour aéronef avec au moins un système de deux sabots d'accrochage solidaires du plancher dudit aéronef, au moins un premier desdits sabots comportant un logement en creux, caractérisé par le fait qu'il comprend:

- une tige, une des deux extrémités de ladite tige comportant des moyens d'agrafage et de dégrafage avec l'autre second sabot,
- une contre-tige,
- des moyens pour monter coulissante une première extrémité de ladite contre-tige par rapport à ladite tige, pour que ladite contretige et ladite tige puissent se trouver dans, respectivement, au moins deux positions, une première dite "rentrée" et une seconde dite "sortie",
- des moyens pour appliquer une force élastique entre lesdites tige et contre-tige pour tendre à les positionner dans ladite position "sortie",
- des moyens de blocage-déblocage desdites tige et contre-tige l'une par rapport à l'autre dans au moins une des deux positions,
- des moyens pour commander le coulissement de l'une desdites tige et contre-tige l'une par rapport à l'autre suivant une direction donnée,
- la deuxième extrémité de ladite contre-tige comportant un embout ayant une forme sensiblement complémentaire dudit logement en creux dans ledit premier sabot, de façon à ce que cedit embout puisse venir se loger dans ledit logement en creux.

Les figures du dessin annexé feront bien comprendre comment l'invention peut être réalisée. Sur ces figures, des références identiques désignent des éléments semblables.

La figure 1 est une vue en perspective éclatée d'un mode de réalisation d'un mécanisme d'accrochage selon l'invention.

Les figures 2 et 3 sont deux vues simplifiées, respectivement de face et de côté, du mécanisme selon la figure 1, en association avec une porte d'un aéronef partiellement représentée, le mécanisme étant représenté dans sa position rentrée, la figure 3 étant une coupe référencée a-a sur la figure 2.

La figure 4 est un schéma permettant de faire ressortir des avantages pour une utilisation donnée du mécanisme selon l'invention.

La figure 5 représente une variante de réalisation d'un mécanisme d'accrochage selon l'invention, cette variante concernant plus particulièrement un mode de réalisation des moyens de blocage-déblocage.

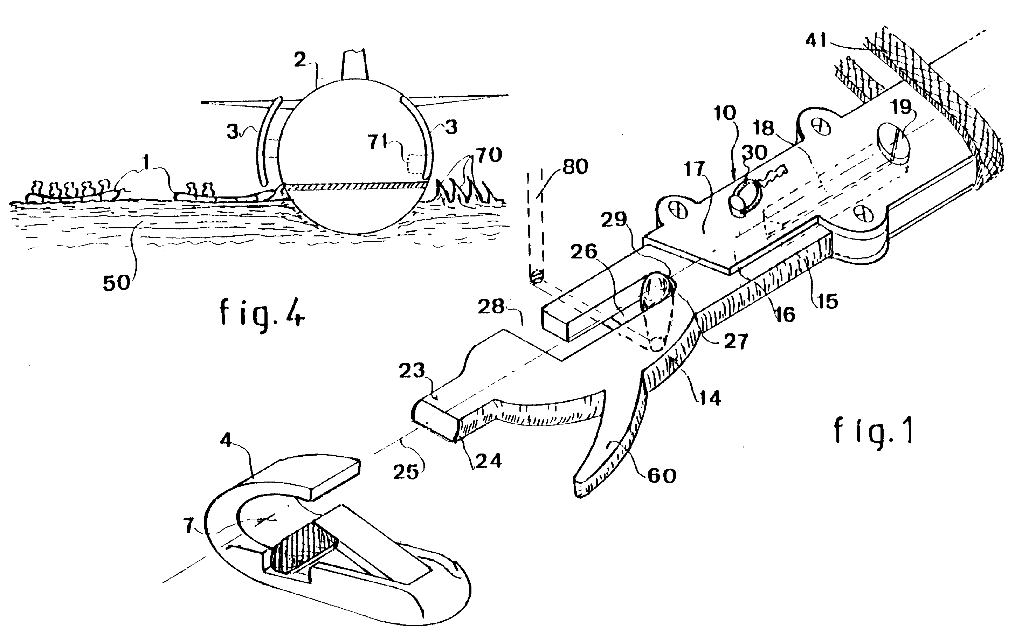

Les figures 1 à 5 représentent un mécanisme d'accrochage d'un dispositif de sauvetage, par exemple du type toboggan simple 1 ou canot, tel que ceux que l'on trouve sur les aéronefs 2 qui survolent de grandes étendues d'eau comme les mers et les océans. D'une façon connue, ces toboggans sont situés sur les portes 3, pour une simple raison de facilité et de rapidité d'utilisation avec un minimum de perte de temps pour leur mise en fonction. Aussi est-il généralement prévu, de chaque côté de la porte 3, un sabot d'accrochage 4, 5, solidaire du plancher 6 de l'aéronef 2.

Au moins un des sabots, par exemple le sabot 4, comporte un logement en creux 7, l'autre sabot 5 comportant avantageusement des moyens d'agrafage et de dégrafage 8 qui peuvent être un logement en creux 9 de même structure que celui du sabot 4.

Plus précisément, le mécanisme d'accrochage comprend une tige 10 d'une longueur inférieure à la distance séparant les deux sabots 4, 5. Une extrémité 11 de la tige comporte des moyens 12 aptes à coopérer avec les moyens d'agrafage et de dégrafage 8. Ces moyens 12 sont, par exemple, un embout 13 pouvant venir se placer dans le logement en creux 9. Il comprend en plus une contre-tige 14 et des moyens pour monter coulissante une première extrémité 15 de la contre-tige par rapport à la tige, pour que la contre-tige 14 et la tige 10 puissent se positionner dans, respectivement, au moins deux positions, une première dite "rentrée", dans laquelle la distance entre les deux extrémités les plus éloignées, respectivement de la tige et de la contre-tige, ait une valeur permettant à la seconde extrémité 23 de la contre-tige 14 de se trouver en dehors du logement 7 lorsque l'embout 13 est dans le logement 9, et une seconde position dite "sortie" pour laquelle la distance entre ces deux extrémités les plus éloignées ait une valeur supérieure à la distance séparant les deux sabots 4, 5.

Avantageusement, ces moyens pour monter coulissante l'extrémité 15 de la contre-tige 14 par rapport à la tige 10 sont constitués par une cavité 16 réalisée dans l'extrémité 17 de la tige 10 opposée à l'embout 13, cette cavité ayant une section sensiblement complémentaire de celle de l'extrémité 15 de la contre-tige 14. Pour définir les deux positions mentionnées ci-avant, par exemple, la contre-tige 14 comporte une lumière 18 d'une longueur sensiblement égale à la différence de longueur entre les deux extrémités les plus éloignées des deux éléments 10 et 14 quand ils se trouvent dans l'une ou l'autre des deux positions "rentrée" et sortie". De plus, une goupille 19 traverse la lumière 18 tout en étant solidaire de la tige 10. De ce fait, en parcourant la lumière, cette goupille constitue une butée avec les deux extrémités de celle-ci, définissant ainsi les deux positions extrêmes "rentrée" et "sortie".

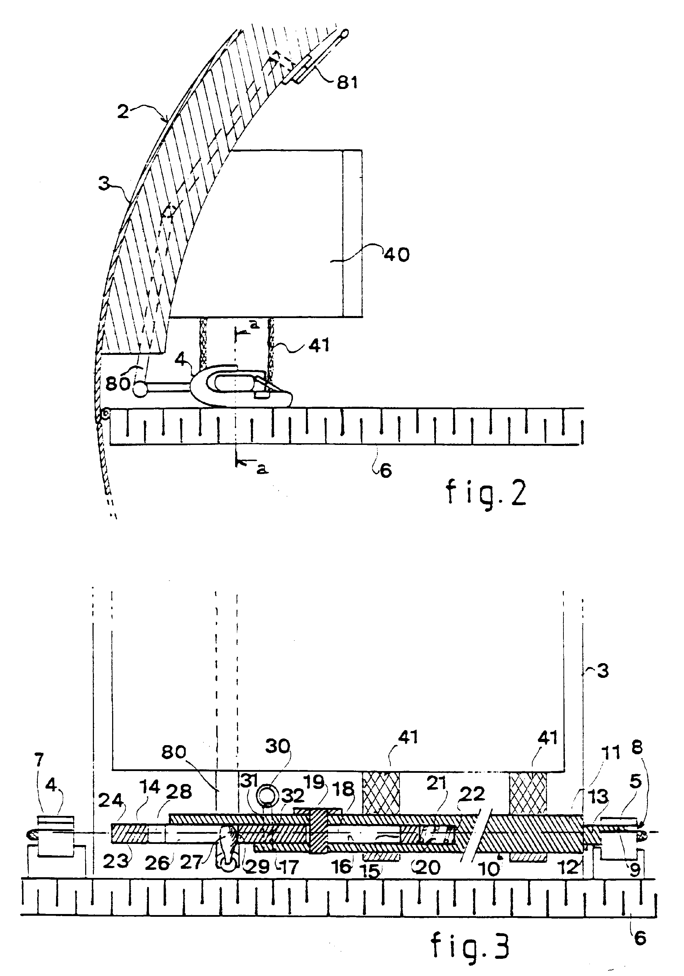

Le mécanisme comprend aussi des moyens 20 pour appliquer une force élastique entre la tige 10 et la contre-tige 14 de façon à exercer constamment une force obligeant la tige et la contre-tige à avoir tendance à prendre la position "sortie" définie ci-dessus. Avantageusement, comme illustré sur la figure 3, ces moyens 20 sont constitués par au moins un ressort de poussée 21 situé dans le fond 22 de la cavité 16 le plus proche de l'embout 13 de la tige 10 et agissant entre ce fond et l'extrémité 15 de la contre-tige 14.

L'extrémité 23 de la contre-tige 14 opposée à l'extrémité 15 située dans la cavité 16 comporte un embout 24 ayant une forme sensiblement complémentaire de celle du logement en creux 7 du sabot 4. La section de cet embout 24 est telle que la longueur totale de l'ensemble tige et contre-tige, prise entre les deux extrémités 13 et 24 les plus éloignées, soit supérieure à la distance séparant les deux sabots 4, 5.

Le mécanisme comprend aussi des moyens pour commander le coulissement de l'une des tige 10 et contre-tige 14 par rapport à l'autre suivant une direction donnée 25. Ces moyens comportent, dans une première réalisation, une encoche 26 réalisée, dans l'exemple illustré, dans la contre-tige 14, cette encoche 26 étant apte à recevoir un doigt de commande 27 déplaçable dans le sens du coulissement 25 de la tige 10 par rapport à la contre-tige 14, la profondeur de cette encoche 26 étant sensiblement égale à la différence de longueur de l'ensemble des deux éléments quand ils sont dans les deux positions "rentrée" et "sortie". Ce doigt 27 peut appartenir à une tringlerie 80 logée en partie dans la porte et commandée par une manette 81.

Dans une forme avantageuse de réalisation, l'encoche 26 a une forme en "L" qui débouche en 28 latéralement à la contre-tige 14, en un endroit plus éloigné de la tige 10 que son fond 29.

Dans un souci de sécurité, le mécanisme comprend également des moyens de blocage-déblocage de la tige avec la contre-tige dans au moins une position, et avantageusement dans les deux positions "sortie" et "rentrée". Comme illustré sur la figure 3, ces moyens peuvent être constitués par une clavette 30 qui plonge dans deux orifices 31, 32 réalisés respectivement dans la tige et la contre-tige, étant donné que, pour bloquer le mécanisme dans les deux positions, celui-ci peut comporter deux paires d'orifices.

Enfin, pour faciliter sa commande et son utilisation, et aussi le coulissement de la tige 10 par rapport à la contre-tige 14 quand il n'est pas possible de le faire avec le doigt 27 de la tringlerie, le mécanisme comporte des moyens de manoeuvre manuelle, ces moyens pouvant être, par exemple, constitués par une tirette 60 solidaire de la contre-tige 14 et affectant la forme avantageuse d'une poignée lui permettant de pouvoir être aisément prise à la main.

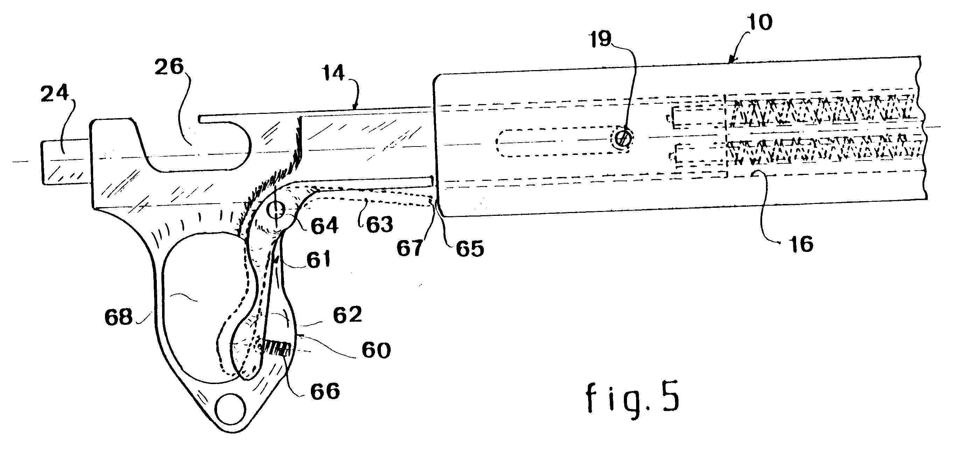

Il a été décrit ci-dessus un mode de réalisation des moyens de blocage-déblocage de la tige avec la contre-tige. Il se peut cependant que la clavette 30 ne soit pas d'un accès facile et que, particulièrement dans les cas de très grande urgence, sa manipulation fasse perdre du temps. La variante illustrée sur la figure 5 permet de pallier une partie de cet inconvénient.

Dans cette variante, les moyens de blocage-déblocage sont constitués par une gâchette 61 montée rotative en coopération avec la tirette manuelle 60. Cette gâchette affecte la forme d'un "L" et est montée autour d'un axe de rotation 64 situé à la base de la tirette 60, cette base étant la partie commune entre la tirette 60 et la contre-tige 14. L'axe de rotation est situé au point commun des deux parties 62, 63 du "L" et la gâchette est disposée en coopération avec la tirette 60 de façon que la partie 62 soit placée dans le creux 68 de cette tirette et que la partie 63 soit dans le prolongement de la tige 10 dans son sens de coulissement. De plus, l'extrémité 67 de cette partie 63 doit pouvoir venir buter, lorsqu' elle sera dans une certaine position, comme cela sera explicité ci-après, contre l'extrémité 65 de la tige 60 tournée vers la contre-tige 14.

La gâchette 61 est donc apte à prendre deux positions respectivement illustrées sur la figure 5 en traits interrompus et en traits pleins, une première position dans laquelle la partie 62 fait un angle d'une certaine valeur avec la tirette 60, et une seconde position dans laquelle cette partie 62 fait un angle sensiblement nul avec la tirette, de façon que, lorsque la gâchette est dans la première position, l'extrémité 67 de sa partie 63 soit apte à s'opposer au coulissement respectif des tige 10 et contre-tige 14, et que, lorsqu' elle est dans la seconde position, cette partie 63 soit effacée du chemin de coulissement des deux tige et contre-tige l'une par rapport à l'autre.

De plus, le mécanisme comprend des moyens élastiques 66, par exemple un ressort, qui tendent à ramener la gâchette dans la première position, celle représentée en traits interrompus.

Le mécanisme décrit ci-dessus fonctionne et s'utilise de la façon suivante:

Le toboggan 1 est généralement disposé plié dans une enceinte 40 fixée sur la porte 3 de l'aéronef 2. Des sangles 41 solidarisent le toboggan avec le mécanisme d'accrochage en faisant le tour, plus particulièrement, de la tige 10. Quand la porte est fermée, figure 2, le mécanisme est commandé pour être dans sa position "sortie" avec l'extrémité 13 dans le logement 9 du sabot 5 et l'embout 24 dans le logement en creux 7, cette commande étant effectuée avec le doigt 27, par la tringlerie. La clavette 30 bloque ces deux éléments dans cette position. Lorsqu' il est besoin d'utiliser le toboggan d'une porte, lors de l'ouverture de cette porte, le doigt 27 parcourt l'encoche 26 jusqu'à être dégagé par la sortie 28 pour dissocier le toboggan de la porte, le toboggan est alors gonflé et s'étend sur la mer 50, figure 4, en restant accroché à l'aéronef par le mécanisme d'accrochage qui reste situé dans les deux sabots 4, 5. Quand tous les passagers que peut contenir le toboggan ont été embarqués, le mécanisme d'accrochage est dissocié des deux sabots. Pour cela, la clavette 30 est enlevée et, au moyen de la tirette 60 sur laquelle on exerce manuellement une traction, la contre-tige est rentrée dans la cavité 16, ce qui désengage l'embout 24 du logement 7. De ce fait, l'autre extrémité 13 de la tige peut facilement être dégagée du sabot 5 et le toboggan peut s'éloigner de l'aéronef 2, figure 4.

Dans le cas de réalisation des moyens de blocage-déblocage selon la figure 5, le mécanisme est facilement dissocié des deux sabots. En effet, le personnel n'a alors qu'une seule manipulation à effectuer. En empoignant la tirette 60, il empoigne aussi la gâchette 61 pour la faire passer dans la seconde position angulaire, c'est-à-dire celle dans laquelle sa partie 62 fait avec la tirette un angle sensiblement nul, la partie 63 s'efface et permet à la contre-tige 14 de coulisser par rapport à la tige 10, cette partie 63 entrant, dans ce mode de réalisation, dans la cavité 16.

Quand un aéronef est obligé d'amerrir, la procédure consiste à le positionner parallèlement aux vagues, puis à ouvrir les portes "passagers" du côté opposé à celui d'où vient la houle 70 (fig. 4), car il est préférable de ne pas ouvrir les portes du côté de cette houle 70. Pour sauver tous les passagers, il est alors nécessaire de transporter les toboggans 71 de ces portes condamnées, sur les seuils des portes ouvertes. A la description du mode d'utilisation, on remarque que le désagrafage du mécanisme d'accrochage à un seuil de porte, pour ensuite l'accrocher à une autre, ne présente aucune difficulté et peut se faire très rapidement. Cette manipulation ne pose pas de problème au personnel de bord, car le mécanisme a un poids relativement faible, en tout cas bien moins important que celui des mécanismes sels l'art antérieur, puisqu' il ne comporte approximativement qu'un nombre moitié d'éléments par rapport aux mécanismes de l'art antérieur. Le mécanisme selon l'invention permet donc le transport d'un toboggan et de son mécanisme d'accrochage d'une porte à l'autre et dans les meilleures conditions.

D'une façon générale, ce mécanisme permet de désolidariser rapidement un toboggan d'un aéronef lorsqu'un quelconque besoin s'en fait sentir.

**Revendications**

1. Mécanisme d'accrochage d'un dispositif de sauvetage du type toboggan simple (1) ou canot pour aéronef (2) avec au moins un système de deux sabots d'accrochage (4,5) solidaires du plancher (6) dudit aéronef, au moins un premier (4) desdits sabots comportant un logement en creux (7), caractérisé par le fait qu'il comprend:

– une tige (10), une des deux extrémités (13) de ladite tige comportant des moyens d'agrafage et de dégrafage (8) avec l'autre second sabot (5),
– une contre-tige (14),
– des moyens pour monter coulissante une première extrémité (15) de ladite contre-tige par rapport à ladite tige pour que la dite contre-tige et ladite tige puissent respectivement se trouver dans au moins deux positions, une première dite "rentrée' et une seconde dite "sortie",

– des moyens (20) pour appliquer une force élastique entre lesdites tige et contre-tige pour tendre à les positionner dans ladite position sortie,

– des moyens de blocage-déblocage (30) desdites tige et contre-tige l'une par rapport à l'autre, dans au moins une des deux positions,

– des moyens (27, 60) pour commander le coulissement de l'une desdites tige et contre-tige par rapport à l'autre suivant une direction donnée (25),

– la deuxième extrémité (23) de ladite contre-tige comportant un embout (24) ayant une forme sensiblement complémentaire dudit logement en creux (7) dans ledit premier sabot de façon à ce que cedit embout puisse venir se loger dans ledit logement en creux.

2. Mécanisme selon la revendication 1, caractérisé par le fait que les moyens pour monter coulissante une première extrémité de ladite contre-tige par rapport à ladite tige pour que ladite contre-tige et ladite tige puissent se trouver dans respectivement au moins deux positions, une première "rentrée" et une seconde "sortie", comportent une cavité (16) réalisée dans ladite tige (10) et d'une forme sensiblement complémentaire de ladite première extrémité (15) de ladite contre-tige (14), une lumière (18) réalisée dans l'une desdites tige et contre-tige et d'une longueur sensiblement égale à la différence de longueur desdits éléments quand ils sont dans les deux dites positions "rentrée" et "sortie", et une goupille (19) traversant la dite lumière, ladite goupille étant solidaire de l'élément ne comportant pas ladite lumière.

3. Mécanisme selon la revendication 2, caractérisé par le fait que les moyens pour appliquer une force élastique entre lesdites tige et contre-tige pour tendre à les positionner dans ladite position "sortie" comportent au moins un ressort (21) de poussée situé dans le fond de ladite cavité (16) pour agir entre ce fond (22) et ladite première extrémité (15) de ladite contre-tige (14).

4. Mécanisme selon l'une des revendications 1 à 3, caractérisé par le fait que les moyens commandables pour commander le coulissement de l'une desdites tige et contre-tige par rapport à l'autre suivant une direction donnée (25) comportent une encoche (26) réalisée dans l'un des éléments tige ou contre-tige, ladite encoche étant apte à recevoir un doigt de commande (27) déplaçable dans le sens de coulissement de la tige par rapport à ladite contre-tige, la profondeur de cette dite encoche étant sensiblement égale à ladite différence de longueur desdits éléments quand ils sont dans les deux dites positions.

5. Mécanisme selon la revendication 4, caractérisé par le fait que ladite encoche (26) est réalisée dans ladite contre-tige (14).

6. Mécanisme selon l'une des revendications 4 et 5, caractérisé par le fait que ladite encoche (26) a une forme en "L" et qu'elle débouche latéralement audit élément en un endroit (28) plus éloigné de l'autre élément que le fond (29) de ladite encoche.

7. Mécanisme selon l'une des revendications 1 à 6, caractérisé par le fait qu'il comporte des moyens de blocage-déblocage desdites tige et contre-tige dans au moins l'une des positions "rentrée" ou sortie".

8. Mécanisme selon l'une des revendications 1 à 7, caractérisé par le fait qu'il comporte des moyens de manoeuvre manuelle de ladite contre-tige par rapport à ladite tige.

9. Mécanisme selon la revendication 8, caractérisé par le fait que les moyens de manoeuvre manuelle sont constitués par une tirette (60) solidaire de ladite contre-tige (14).

10. Mécanisme selon la revendication 9, caractérisé par le fait que lesdits moyens de blocage-déblocage desdites tige et contre-tige comportent une gâchette (61) montée rotative en coopération avec ladite tirette (60), ladite gâchette (61) étant apte à prendre, par une première partie (62), au moins deux positions angulaires par rapport à ladite tirette, une seconde partie (63,67) de ladite gâchette, quand celle-ci est dans la position angulaire faisant la valeur d'angle la plus grande, étant apte à s'opposer au coulissement respectif desdites tige (10) et contre-tige (14), et s'effaçant du chemin de ce coulissement quand la gâchette est dans la position angulaire faisant la valeur d'angle la plus faible.

11. Mécanisme selon la revendication 7, caractérisé par le fait que les moyens de blocage-déblocage desdites tige et contre-tige dans au moins l'une des positions "rentrée" ou sortie" comportent au moins une clavette (30) apte à coopérer dans deux orifices (31,32) réalisés respectivement dans lesdites tige et contre-tige afin de les solidariser dans au moins l'une des deux dites positions.

## Patentansprüche

1. Eine Verankerungsmechanik einer Notausstiegsrutsche (1) oder eines Rettungsbootes für Flugzeuge (2) mit mindestens einem a-us zwei am Boden (6) des genannten Flugzeuges befestigten Verankerungsschuhen (4, 5) bestehenden System, wobei mindestens ein erster (4) dieser Schuhe eine Aufnahme in Form einer Ausnehmung (7) aufweist, dadurch gekennzeichnet, daß sie folgende Teile umfaßt:

– eine Stange (10), deren eines Ende (13) Mittel (8) zum Einhaken in den anderen, zweiten Schuh (5) und zum Aushaken aus diesem zweiten Schuh aufweist,

– eine Gegenstange (14),

– Mittel zum gleitenden Fügen eines ersten Endes (15) der genannten Gegenstange mit der genannten Stange, so daß die genannte Gegenstange und die genannte Stange sich jeweils in mindestens zwei Stellungen, einer ersten sogenannten "eingefahrenen" und einer zweiten
sogenannten "ausgefahrenen", befinden können,
– Mittel (20) zum Aufbringen einer elastischen
Kraft zwischen der genannten Stange und der
genannten Gegenstange, so dass sie die
genannte ausgefahrene Stellung einnehmen,
– Mittel (30) zum gegenseitigen Verriegeln beziehungsweise Entriegeln der genannten Stange
und der genannten Gegenstange in mindestens
einer der beiden Stellungen,
– Mittel (27, 60) zum Herbeiführen einer Verschiebung der genannten Stange oder Gegenstange gegenüber der jeweils anderen längs
einer gegebenen Richtung (25),
– wobei das zweite Ende (23) der genannten
Gegenstange einen Ansatz (24) aufweist, dessen
Form im wesentlichen komplementär zu der
genannten Aufnahme in Form einer Ausnehmung
(7) in dem genannten ersten Schuh ist, so daß
dieser genannte Ansatz sich in der genannten
Aufnahme in Form einer Ausnehmung lagern
kann.

2. Eine Mechanik gemäß Anspruch 1, dadurch
gekennzeichnet, daß die Mittel zum gleitenden Fügen
eines ersten Endes der genannten Gegenstange mit
der genannten Stange, so daß die genannte Gegenstange und die genannte Stange sich jeweils in mindestens zwei Stellungen, einer ersten "eingefahrenen" und einer zweiten "ausgefahrenen", befinden
können, einen in der genannten Stange (10) angebrachten Hohlraum (16) von zu dem genannten
ersten Ende (15) der genannten Gegenstange (14) im
wesentlichen komplementärer Form, ein entweder in
der genannten Stange oder in der genannten Gegenstange angebrachtes Langloch (18), dessen Länge
im wesentlichen gleich der Differenz der Längen beider genannten Teile in den beiden genannten Stellungen ist, und einen durch das genannte Langloch
hindurch verlaufenden Stift (19) umfassen, welcher
mit demjenigen Teil, in welchem nicht das Langloch
angebracht ist, fest verbunden ist.

3. Mechanik gemäß Anspruch 2, dadurch
gekennzeichnet, daß die Mittel zum Aufbringen einer
elastischen Kraft zwischen der genannten Stange
und der genannten Gegenstange, so dass sie die genannte "ausgefahrene" Stellung einnehmen, mindestens eine am Boden (22) des genannten
Hohlraumes (16) gelegene Druckfeder (21) umfassen, welche zwischen diesem Boden (22) und dem
genannten ersten Ende (15) der genannten Gegenstange (14) wirkt.

4. Mechanik gemäß einem der Ansprüche 1 bis 3,
dadurch gekennzeichnet, daß die Betätigungsmittel
zum Herbeiführen einer Verschiebung der genannten
Stange oder Gegenstange gegenüber der jeweils
anderen längs einer gegebenen Richtung (25) eine entweder in der genannten Stange oder in der
genannten Gegenstange angebrachte Ausklinkung
(26) umfassen, welche Ausklinkung für die Aufnahme
eines Betätigungsfingers (27) geeignet ist, welcher in
Richtung der Verschiebung der Stange gegenüber
der genannten Gegenstange beweglich ist, wobei die
Tiefe der genannten Ausklinkung im wesentlichen
gleich der Differenz der Längen beider genannten
Teile in den beiden genannten Stellungen ist.

5. Mechanik gemäß Anspruch 4, dadurch
gekennzeichnet, daß die genannte Ausklinkung (26)
in der genannten Gegenstange (14) angebracht ist.

6. Mechanik gemäß Anspruch 4 oder Anspruch 5,
dadurch gekennzeichnet, daß die genannte Ausklinkung (26) L-förmig ist und an dem genannten Teil seitlich an einer Stelle (28) mündet, welche von dem
anderen Teil weiter als der Boden (29) der genannten
Ausklinkung entfernt ist.

7. Mechanik gemäß einem der Ansprüche 1 bis 6,
dadurch gekennzeichnet, daß sie Mittel zum Verriegeln beziehungsweise Entriegeln der genannten
Stange und der genannten Gegenstange in mindestens einer der Stellungen "eingefahren" beziehungsweise "ausgefahren" umfaßt.

8. Mechanik gemäß einem der Ansprüche 1 bis 7,
dadurch gekennzeichnet, daß sie Mittel für die
manuelle Betätigung der genannten Gegenstange in
Bezug auf die genannte Stange umfaßt.

9. Mechanik gemäß Anspruch 8, dadurch
gekennzeichnet, daß die Mittel zur manuellen Betätigung aus einem mit der genannten Gegenstange (14)
fest verbundenen Handzug (60) bestehen.

10. Mechanik gemäß Anspruch 9, dadurch
gekennzeichnet, daß die genannten Mittel für das
Verriegeln bzw. Entriegeln der genannten Stange und
der genannten Gegenstange einen an dem genannten Handzug (60) angelenkten Drücker (61) umfassen, welcher genannte Drücker (61) geeignet ist, mit
einem ersten Teilstück (62) mindestens zwei Winkelstellungen gegenüber dem genannten Handzug einzunehmen, während ein zweites Teilstück (63, 67)
des genannten Drückers, wenn dieser sich in der Winkelstellung befindet, in welcher der Winkel am größten ist, geeignet ist, die gegenseitige Verschiebung
der genannten Stange (10) und der genannten
Gegenstange (14) zu verhindern, und in der zweiten
Winkelstellung, in welcher der Winkel am kleinsten
ist, den Verschiebeweg freigibt.

11. Mechanik gemäß Anspruch 7, dadurch
gekennzeichnet, daß die Mittel für das Verriegeln
beziehungsweise Entriegeln der genannten Stange
und der genannten Gegenstange in mindestens einer
der Stellungen "eingefahren" beziehungsweise "ausgefahren" mindestens einen Stecker (30) umfassen,
welcher geeignet ist, mit zwei in der genannten
Stange beziehungsweise in der genannten Gegenstange angebrachten Öffnungen (31, 32) zusammenzuwirken, um die genannte Stange und die genannte Gegenstange in zumindest einer der beiden genannten Stellungen fest zu verbinden.

## Claims

1. Mechanism for fastening a life-saving device of the simple evacuation slide (1) or dinghy type for an aircraft (2), having at least one system of two fastening shoes (4,5) fast with the floor (6) of said aircraft, at least a first (4) of said shoes comprising a recessed housing (7), characterized in that it comprises :
  – a rod (10), one of the two ends (13) of said rod comprising means (8) for clipping and releasing with respect to the other second shoe (5),
  – a counter-rod (14),
  – means for slidably mounting a first end (15) of said counter-rod with respect to said rod, so that said counter-rod and said rod may lie respectively in at least two positions, a first, so-called "retracted" position and a second, so-called "extended" position,
  – means (20) for applying an elastic force between said rod and counter-rod to tend to position them in said "extended" position,
  – means (30) for latching-unlatching said rod and counter-rod with respect to each other in at least one of the two positions,
  – means (27,60) for controlling slide of one of said rod and counter-rod with respect to the other in a given direction (25),
  – the second end (23) of said counter-rod comprising an endpiece (24) whose shape is substantially complementary of said recessed housing (7) in said first shoe, so that said endpiece may be housed in said recessed housing.

2. Mechanism according to claim 1, characterized in that the means for slidably mounting a first end of said counter-rod with respect to said rod so that said counter-rod and said rod may lie respectively in at least two positions, a first "retracted" position and a second "extended" position, comprise a cavity (16) made in said rod (10) and having a shape substantially complementary of said first end (15) of said counter-rod (14), a slot (18) made in one of said rod and counter-rod whose length is substantially equal to the difference in length of said elements when they are in the said two "retracted" and "extended" positions, and a pin (19) passing through said slot, said pin being fast with the element not comprising said slot.

3. Mechanism according to claim 2, characterized in that the means for applying an elastic force between said rod and counter-rod to tend to position them in said "extended" position, comprise at least one thrust spring (21) located in the bottom of said cavity (16) in order to act between this bottom (22) and said first end (15) of said counter-rod (14).

4. Mechanism according to one of claims 1 to 3, characterized in that the controllable means for controlling slide of one of said rod and counter-rod with respect to the other in a given direction (25), comprise a notch (26) made in one of the rod or counter-rod elements, said notch being adapted to receive a control finger (27) movable in the direction of slide of the rod with respect to said counterrod, the depth of said notch being substantially equal to said difference in length of said elements when they are in the said two positions.

5. Mechanism according to claim 4, characterized in that said notch (26) is made in said counter-rod (14).

6. Mechanism according to one of claims 4 and 5, characterized in that said notch (26) is L-shaped and it opens out laterally to said element at a spot (28) further from the other element than the bottom (29) of said notch.

7. Mechanism according to one of claims 1 to 6, characterized in that it comprises means for latching-unlatching said rod and counter-rod in at least one of the "retracted" or "extended" positions.

8. Mechanism according to one of claims 1 to 7, characterized in that it comprises means for manually manoeuvring said counter-rod with respect to said rod.

9. Mechanism according to claim 8, characterized in that the manual manoeuvring means are constituted by a pull element (60) fast with said counterrod (14).

10. Mechanism according to claim 9, characterized in that said means for latching-unlatching said rod and counter-rod comprise a follower (61) mounted to rotate in cooperation with said pull element (60), said follower (61) being adapted to take, by a first part (62), at least two angular positions with respect to said pull element, a second part (63,67) of said follower, when it is in the angular position making the largest angle, being adapted to oppose respective slide of said rod (10) and counter-rod (14), and being retracted from the path of this slide when the follower is in the angular position making the smallest angle.

11. Mechanism according to claim 7, characterized in that the means for latching-unlatching said rod and counter-rod in at least one of the "retracted" or "extended" positions comprise at least one pin (30) adapted to cooperate in two orifices (31,32) made respectively in said rod and counter-rod in order to connect them in at least one of the said two positions.

fig.4

fig.1

EP 0 363 543 B1

fig.2

fig.3

fig.5

EP 0 363 543 B1